# EUROPÄISCHE PATENTANMELDUNG

(11) **EP 1 517 056 A1**
(43) Veröffentlichungstag der Anmeldung: **23.03.2005**
(21) Anmeldenummer: 04021899.2
(22) Anmeldetag: 15.09.2004
(51) Int. Cl.: F16C 29/06

(54) **Wälzkörperführung**

(30) Priorität: 17.09.2003 DE 10342841
(71) Anmelder: Neff Antriebstechnik Automation GmbH, 71111 Waldenbuch (DE)
(72) Erfinder: Hermann, Martin, Dr., 71063 Sindelfingen (DE); Kreutzkämper, Jürgen, 74889 Sinsheim-Hoffenheim (DE); Schön, Uwe, 70771 Leinfelden-Echterdingen (DE)
(74) Vertreter: Patentanwälte Rüger, Barthelt & Abel

(57) **Zusammenfassung**

Bei einer Führungseinrichtung sind an den stirnseitigen Enden eines Wälzkörperführungskörpers Umlenkstücke vorgesehen, die die Wälzkörperlaufbahnen mit entsprechenden Wälzkörperrückführungsbahnen verbinden. Den Übergang zwischen den in den Umlenkstücken vorgesehenen Umlenkkanälen und den Wälzkörperlaufbahnen bilden Leitfinger, die zu beiden Seiten der jeweiligen Wälzkörperlaufbahn in entsprechende Ausnehmungen ragen, die zu beiden Seiten der Wälzkörperlaufbahn ausgebildet sind.

## Beschreibung

Die Erfindung betrifft eine Führungseinrichtung mit Wälzkörperumlauf, insbesondere eine Kugelschlittenführung.

Aus der DE 4005582 C2 ist eine als Linearlager bezeichnete Führungseinrichtung mit einem Schlitten, der einen Wälzkörperführungskörper bildet, und mit einem Führungsteil bekannt, an dem zwei Laufbahnen ausgebildet sind. Der Schlitten weist zwei gerade Kugelführungsbahnen in Form von nutartigen Vertiefungen mit halbkreisförmigem Querschnitt auf, in denen Kugeln laufen. An den beiden Stirnseiten des Schlittens sind angespritzte Kunststoffumlenkelemente vorgesehen, die Umlenkkanäle für die Kugeln aufweisen. Die Umlenkkanäle sind beispielsweise im Kernausschmelzverfahren hergestellt, wobei zylindrische und dann entsprechend gebogene Formkerne Verwendung finden.

Die Übergangsstelle zwischen der rinnenförmigen Führungsbahn des Schlittens und dem Umlenkkanal des Umlenkteils bildet eine Fuge, die für den Lauf der Kugel eine gewisse Unstetigkeitsstelle darstellen kann.

Die US-PS 5 217 308 offenbart eine Kugelschlittenführung mit einem quaderförmigen Schlitten, an dessen Längskanten rinnenförmige Laufbahnen für die Kugeln vorgesehen sind. An den Stirnseiten des Schlittens sind mehrteilig aufgebaute Kugelumlenkteile angeordnet, die die Kugeln von den Laufbahnen in Rückführungsbahnen umleiten. Die Trennfuge zwischen den Umlenkteilen und dem Schlitten verläuft in einer Ebene an der jeweiligen Stirnseite des Schlittens. Der Lauf der Kugeln über die Trennfuge ist kritisch.

Außerdem ist aus der US-PS 5 806 986 eine Linearführung bekannt, dessen Schlitten im Innenraum einer Führungsschiene über Kugelumlaufführungen gelagert ist. Zu jeder Kugelumlaufführung gehört ein Führungsteil mit geraden Führungsbahnen und ebenfalls geraden Rückführungsbahnen, wobei die Verbindung zwischen den Führungsbahnen und den Rückführungsbahnen über Umlenkstücke geschaffen ist. Diese stoßen an einer ebenen Trennfuge an den Führungskörper an. Wiederum entstehen Trennfugen, die eine kritische Stelle für den Lauf der Kugeln darstellen können und eine manuelle Nacharbeit erfordern. Dies erfordert höchste Aufmerksamkeit und großen Aufwand bei der Produktion. Außerdem wird beim manuellen Einschleifen des Übergangs eine womöglich gehärtete Oberfläche gestört.

Davon ausgehend ist es Aufgabe der Erfindung, eine Führungseinrichtung mit Wälzkörperumlauf zu schaffen, der sich rationell herstellen lässt. Dabei soll sie möglichst hohe Anforderungen an die Laufqualität erfüllen.

Diese Aufgabe wird mit einer Führungseinrichtung gemäß Anspruch 1 wie auch durch eine Führungseinrichtung gemäß Anspruch 15 gelöst:

Die erfindungsgemäße Führungseinrichtung weist wenigstens einen Wälzkörperführungskörper mit wenigstens einer Wälzkörperlaufbahn (z.B. einer Kugellaufbahn) und einem zugeordneten Wälzkörperrückführungskanal auf, wobei wenigstens ein Umlenkstück vorgesehen ist, das die Wälzkörperlaufbahn mit der Wälzkörperrückführungsbahn verbindet. Ausgehend von dem Umlenkstück erstreckt sich wenigstens ein Leitfortsatz entlang der Wälzkörperlaufbahn in wenigstens eine Ausnehmung des Wälzkörperführungskörpers hinein. Diese so gebildeten Leitfortsätze begünstigen und erleichtern den Übergang der Wälzkörper von der Laufbahn in die Umlenkbahn. Dies gilt insbesondere, wenn als Wälzkörper Kugeln zur Anwendung kommen und die Laufbahn kreisbogenförmig oder spitzbogenförmig gewölbt ist.

Vorzugsweise ist der Leitfortsatz als länglicher Leitfinger ausgebildet, der sich von dem Umlenkkörper weg verjüngt. Seine die Laufbahn der Kugel überquerende Kante ist vorzugsweise in spitzem Winkel zur Längsrichtung der Laufbahn angeordnet, so dass die Kugel, wenn sie über den Übergang zwischen der Laufbahn und dem Leitfinger rollt, diesen Übergang in spitzem Winkel zur vorhandenen Fuge überquert. Dies trägt zum ruhigen Lauf bei. Der spitze Winkel α ist vorzugsweise geringer als der Rollreibungswinkel ϕ der Kugel. Der Rollreibungswinkel wird durch den Arcus-Tangens der senkrecht zur Laufbahn auf den Wälzkörper einwirkenden Kraft zu der Kraft bestimmt, die der rollende Wälzkörper als Antriebskraft parallel zur Laufbahn benötigt. Durch diese Maßnahme wird ein williges Eintreten der Wälzkörper in die lasttragende Zone der Wälzkörperlaufbahn und ein leichtes Austreten an dem gegenüber liegenden Ende derselben erreicht.

Vorzugsweise sind an dem Umlenkstück für jede Wälzkörperlaufbahn zwei zueinander im Wesentlichen parallele Leitfortsätze (Leitfinger) vorgesehen, die auch als gegabelter einziger Fortsatz angesehen werden können. Beim Übergang von der Wälzkörperlaufbahn zu dem Umlenkstück läuft jede Kugel zwischen die beiden Leitfortsätze, deren aufeinander zu weisende Kanten einander zu dem Umlenkstück hin annähern und in einem Scheitel zusammenlaufen. Die Kugel wird somit von den beiden Leitfortsätzen wie von einer zweizinkigen Gabel aufgenommen, was zur Laufruhe beiträgt. Die beiden Leitfortsätze, die die zweizinkige Gabel bilden, weisen aufeinander zu weisende Kanten auf, die v-förmig zueinander ausgerichtet sind. Sie können etwa parabolisch gekrümmt sein und laufen in einem Scheitel zusammen. Kommen die Kugeln aus dem Umlenkkanal laufen sie von dem Scheitel über die v-förmigen Kanten in die lasttragende Zone der Wälzkörperlaufbahn. Die Bahn der aus dem Umlenkstück kommenden Kugel verzweigt sich somit an dem Scheitel. Es wird ein williger Übergang der Kugeln von den Laufbahnen zu dem Umlenkstück und von dem Umlenkstück zu den Laufbahnen erreicht. Dies ist unabhängig davon der Fall, ob die Gabelung der Lauflinie der Wälzkörper auf ihrem Weg von dem Umlenkkanal auf die Laufbahn noch in dem Umlenkstück (auf Kunststoffuntergrund) oder bereits auf der Laufbahn (auf Metalluntergrund) erfolgt.

Die Leitfortsätze füllen die Ausnehmungen des Wälzkörperführungskörpers im Wesentlichen ganz aus. Vorzugsweise liegen sie jedoch ohne feste stoffschlüssige Verbindung in diesen Ausnehmungen. Sie können somit in den Ausnehmungen Mikrobewegungen ausführen und somit beispielsweise Vibrationen absorbieren. Zu diesem Fall schließen sie an ihren Rückseiten mit dem jeweiligen Boden der Ausnehmungen keilförmige Mikrospalte ein. Das Material der Führungsfortsätze stimmt vorzugsweise mit dem Material des Umlenkstücks überein und sie sind insoweit einstückig mit diesem ausgebildet. Dies ermöglicht eine einfache Herstellung, indem das Umlenkstück an den Wälzkörperführungskörper angespritzt wird. Dabei können auch die Leitfortsätze miterzeugt werden, indem entsprechende bis in die Laufbahnen ragende Gießkerne an den Wälzkörperumlenkkörper angelegt und dann umspritzt werden. Das in die zu beiden Seiten der Wälzkörperlaufbahnen vorhandene Ausnehmungen vordringende Kunststoffmaterial bildet dann die Leitfortsätze.

Die erfindungsgemäße Führungseinrichtung weist bei einer Bewegung des wälzkörperführungskörpers entlang seiner Führungsschiene konstante, nicht wegabhängige Verschiebekräfte auf. Die Geräuschemission ist gering. Insbesondere laufen die Kugeln oder sonstige Wälzkörper ruckfrei in die Laufbahn ein und aus.

Insbesondere lässt sich mit der vorgestellten Maßnahme die Oberflächenqualität der Führungsbahn am Bahnanfang und am Bahnende erhöhen. Es sind keine manuellen oder maschinellen Nacharbeiten an der gehärteten Laufbahn erforderlich. Die Geometrie kann in ungehärtetem Zustand vollständig fertig bearbeitet werden und zwar durch eine einfache maschinelle Bearbeitung. Härteverluste, wie sie durch Ausglühen oder Abtrag einer gehärteten Oberfläche ansonsten beim Handeinschleifen des Übergangs zwischen Umlenkbahn und Führungsbahn auftreten könnten, werden sicher vermieden. Die Geometrie des Übergangsbereichs und der Leitfinger ergibt sich durch den schrägen Ausschnitt der Laufbahn durch eine Ebene oder eine Zylinderfläche mit großem Radius. In diesen schrägen oder keilförmigen Einschnitt wird bei der Herstellung ein Gießkern eingelegt, der dann die Form der Laufbahn im Übergangsbereich festlegt. Weil der Gießkern im Bereich der Laufbahn satt (spaltfrei) an dieser anliegt und sicher der Übergang mit schräger Trennungslinie über einen Bereich von z.B. 10 mm erstreckt, ist der Übergang stufenlos glatt. Die Umlenkkörper haben somit Fortsätze, die den stufenlosen Übergang zwischen Laufbahn und Umlenkkanal schaffen.

Die Leitfortsätze sind vorzugsweise so ausgebildet, dass der Winkel zwischen den in Bahnlängsrichtung an die Bahn angelegten Tangenten zu beiden Seiten der Übergangszone zwischen dem Umlenkstück und dem Wälzkörperführungskörper kleiner oder gleich dem Rollreibungswinkel des betreffenden Wälzkörpers ist. Die Leitfortsätze ermöglichen dann eine höhere Geschwindigkeit der Umlenkung, d.h. ggf. auch niedrigere Umlenkradien und zugleich eine niedrige Gesamtreibung. Letztendlich wird ein stufenloser Übergang zwischen dem Umlenkstück und dem Wälzkörperführungskörper erreicht.

Die Laufbahn ist innerhalb der Umlenkung und der Übergangszone vorzugsweise krümmungsstetig ausgebildet. Es werden dadurch verminderte Impulskräfte auf die Wälzkörper ausgeübt.

Gemäß Anspruch 15 wird das Umlenkstück mittels formschlüssiger Befestigungsfortsätze an dem Wälzkörperführungskörper befestigt, wobei die formschlüssige Verklammerung zwischen Umlenkstück und Wälzkörperführungskörper bei der Herstellung des Umlenkstücks mitbewirkt wird. Dabei wird das Umlenkstück vorzugsweise so ausgebildet, dass es einen Abschnitt des Wälzkörperführungskörpers wie eine Klammer umgreift. Schwindet der Kunststoff bei der Abkühlung und/oder Aushärtung etwas wird dadurch ein vorgespannter spielfreier Sitz des Umlenkstücks an dem Wälzkörperführungskörper erreicht. Die Befestigungsfortsätze und die zugeordneten Ausnehmungen in dem Führungskörper sind vorzugsweise an dessen Schmalseiten zu beiden Seiten der Laufbahnen angeordnet. Hierdurch wird die Positionierung des Umlenkstücks in Bezug auf den Wälzkörperführungskörper gerade in Nachbarschaft des Übergangs zwischen der Wälzkörperlaufbahn und der Umlenkbahn sicher gestellt. Es lässt sich somit in einem einfachen Fertigungsprozess eine hohe Fertigungsgenauigkeit und eine hohe Fertigungssicherheit erzielen. Insbesondere ist die Qualität des Übergangs zwischen der Wälzkörperlaufbahn und der Umlenkbahn und die Laufruhe, mit der die Kugeln über diese Stelle laufen, kaum davon abhängig, in welchem Maß der für das Umlenkstück verwendete Kunststoff schwindet. Auch nach der Herstellung einwirkende Einflüsse wie Alterung, Luftfeuchtigkeit oder Temperatur wirken sich auf die Präzision des Kugelübergangs kaum aus.

Weitere Einzelheiten vorteilhafter Ausführungsformen der Erfindung ergeben sich aus der Zeichnung, der Beschreibung oder Ansprüchen.

In der Zeichnung ist ein Ausführungsbeispiel der Erfindung veranschaulicht. Es zeigen:
- Figur 1: eine Führungseinrichtung in ausschnittsweiser perspektivischer Darstellung,
- Figur 2: Schlitten und Führungsschienen der Führungseinrichtung nach Figur 1 in perspektivischer, abschnittsweiser Darstellung,
- Figur 3: den Schlitten der Führungseinrichtung nach Figur 1 in perspektivischer Darstellung in einem anderen Maßstab,
- Figur 4: den Schlitten nach Figur 3 ohne Wälzkörper und in einem anderen Maßstab,
- Figur 5: den Schlitten nach Figur 4 in Explosionsdarstellung,
- Figur 6: den Schlitten nach Figur 5 in einer ausschnittsweisen Explosionsdarstellung in einem anderen Maßstab,
- Figur 7: die Führungseinrichtung nach Figur 1 in längs geschnittener ausschnittsweiser Darstellung, in einem anderen Maßstab und
- Figur 8: die Führungseinrichtung nach Figur 7 mit Veranschaulichung des Verhältnisses zwischen dem Rollreibungswinkel ϕ und dem spitzen Winkel der Trennfuge zwischen einem Leitfinger des Übergangsstücks und der Laufbahn.

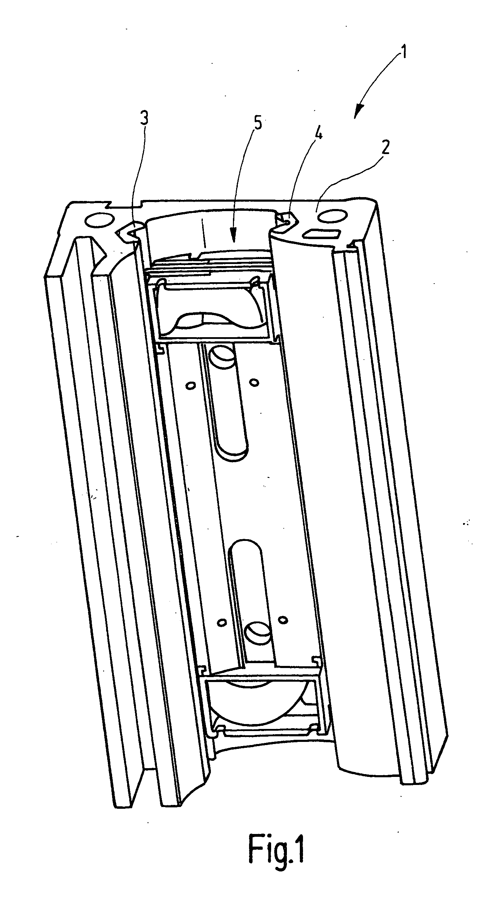

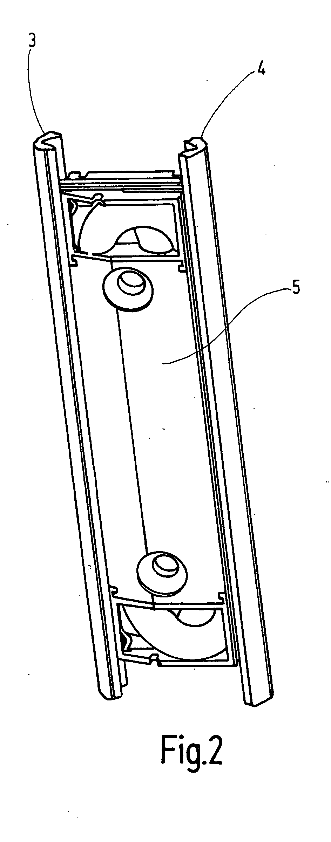

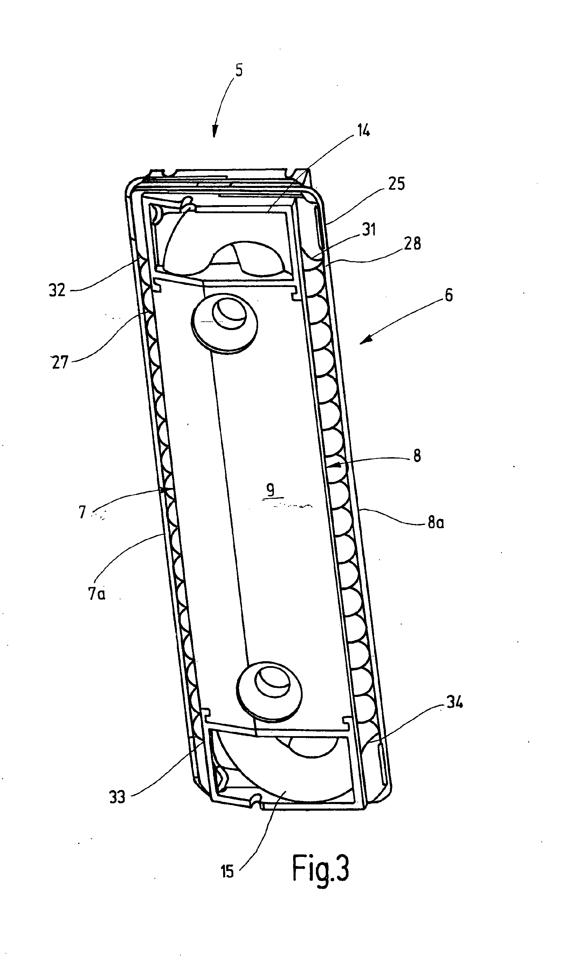

In Figur 1 ist eine lineare Führungseinrichtung 1 im Ausschnitt veranschaulicht. Es handelt sich um eine Kugelführung. Zu der Führungseinrichtung 1 gehört ein Träger oder Führungskörper 2 mit wenigstens einer und im vorliegenden Ausführungsbeispiel zwei Führungsschienen 3, 4. Die Führungsschienen 3, 4 sind an Innenflanken des ansonsten c-förmig ausgebildeten Führungskörpers 2 angeordnet und verlaufen parallel zueinander. Sie sind mit rinnenförmigen Führungsprofilen versehen, die beispielsweise als Spitzbogenprofil ausgebildet sind. An diesen Führungsschienen 3, 4 ist ein Schlitten 5 längs verschiebbar gelagert, wie dies gesondert in Figur 2 veranschaulicht ist. Die Führungsschienen 37 4 sind in Figur 2 verkürzt dargestellt. Sie können beliebig lang ausgebildet sein und bestimmen somit den Verfahrweg des Schlittens 5. Zur Lagerung desselben an den Führungsschienen 3, 4 gehören Wälzkörper, beispielsweise in Form von Kugeln 6, wie sie aus Figur 3 ersichtlich sind. Dazu sind an beiden Schmalseiten des ansonsten im Wesentlichen flachen quaderförmigen Schlittens 5 Wälzkörperlaufbahnen 7, 8 in Form länglicher gerader nutartiger Vertiefungen ausgebildet. Das Querschnittsprofil dieser Vertiefungen folgt beispielsweise einem Kreisbogen oder einem Spitzbogen. Die Wälzkörperlaufbahnen 7, 8 sind dabei an einem Wälzkörperführungskörper 9 ausgebildet, der vorzugsweise aus Stahl besteht.

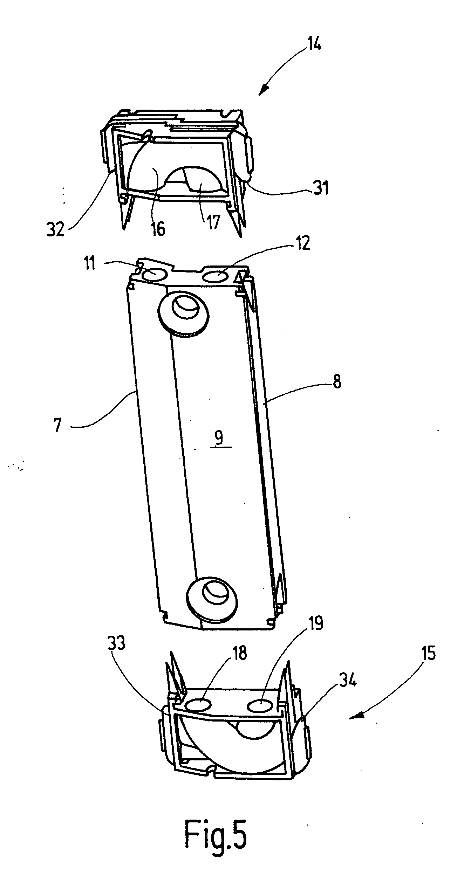

Er enthält außerdem zwei gerade Wälzkörperrückführungsbahnen 11, 12, die vorzugsweise einen kreisförmigen Querschnitt aufweisen und parallel zu den Wälzkörperlaufbahnen 7, 8 in dem Wälzkörperführungskörper 9 angeordnet sind. Sie münden an dessen ebenen Stirnseiten, an die, wie aus den Figuren 3, 4 und 5 hervorgeht, Umlenkstücke 14, 15 angeschlossen sind. Diese sind beispielsweise und vorzugsweise durch Kunststoffkörper gebildet, die etwa u-förmige, sich gegenseitig überkreuzende Umlenkkanäle 16, 17, 18, 19 umgrenzen, die, wie aus Figur 5 hervorgeht, vorzugsweise einen Kreisquerschnitt aufweisen. Die Umlenkstücke 14, 15 sind als Kunststoffkörper ausgebildet und beispielsweise im Spritzgussverfahren hergestellt. Dabei werden die Umlenkkanäle 16 bis 19 durch Einlegen von Gießkernen in die entsprechende Gießform erzeugt. Die Gießkerne werden später entfernt, d.h. z.B. heraus gezogen, heraus geschmolzen, heraus geätzt oder heraus gebrochen.

Figur 3 veranschaulicht außerdem an den Umlenkstücken 14, 15 gehaltene Bügeldrähte 7a, 8a, die sich parallel zu den Laufbahnen 7, 8 von Umlenkstück 14 zu Umlenkstück 15 erstrecken. Die Bügeldrähte 7a, 8a halten die Kugeln 6 auf ihren Laufbahnen 7, 8 wenn und so lange der Wälzkörperführungskörper 9 nicht zwischen den Führungsschienen 3, 4 sitzt. Dies ergibt eine einfache Möglichkeit zur Befüllung des Wälzkörperführungskörpers 9 mit Kugeln 6 und eine einfache Montage an und zwischen den Führungsschienen 3, 4.

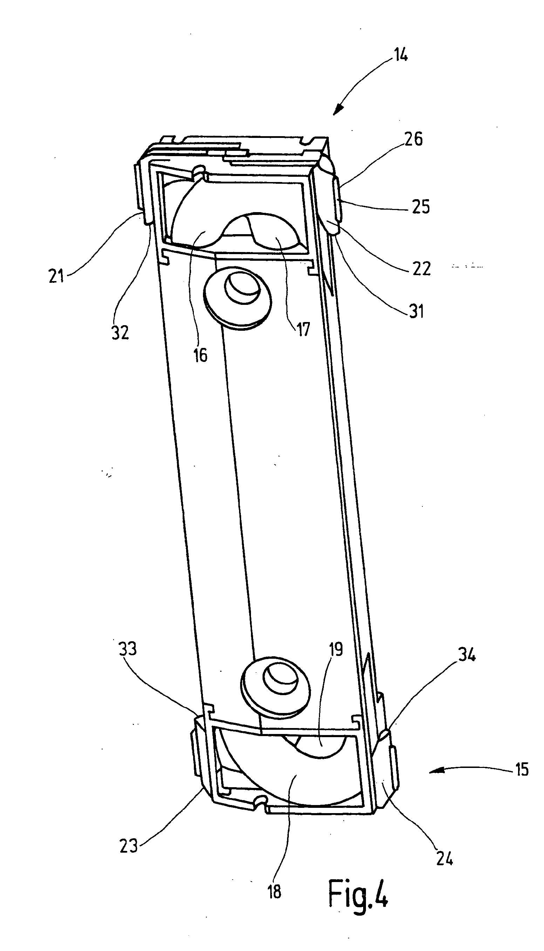

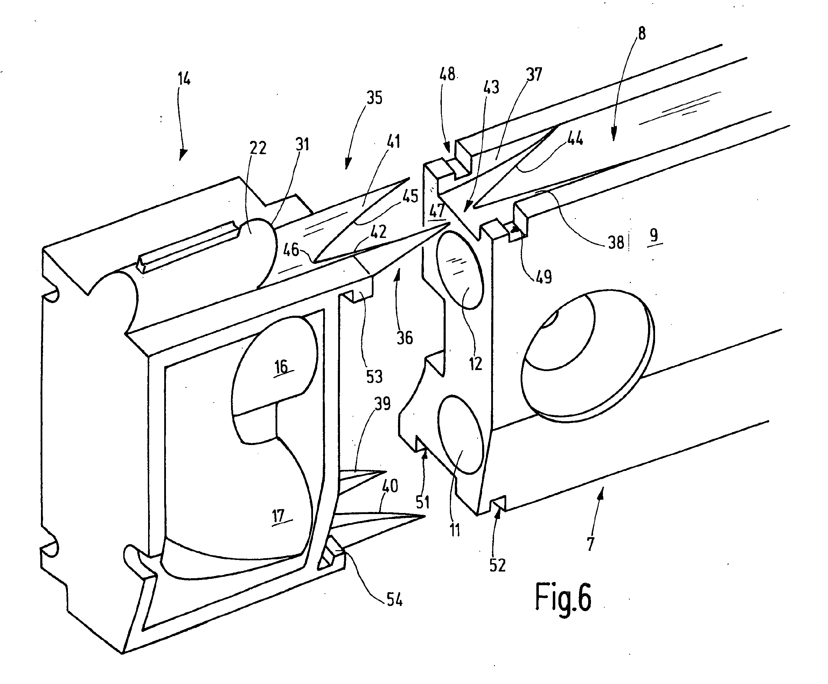

Die genaue Ausbildung der Umlenkstücke 14, 15 und deren Funktion ist insbesondere aus den Figuren 4 und 6 ersichtlich. Wie Figur 4 veranschaulicht, weist jedes Umlenkstück 14, 15 zur Aufnahme der Kugeln und zum Einleiten derselben in die Umlenkkanäle 16, 17, 18, 19 schaufelartige Vorsprünge 21, 22, 23, 24 auf, die wie längliche Schalen in die entsprechenden Führungsschienen 3, 4 greifen. Sie sind außen etwa zylindrisch geformt und weisen noch längliche Führungsleisten 25, 26 zur seitlichen Festlegung von aus Figur 3 ersichtlichen Sicherungsbügeln 27, 28 auf. Diese erstrecken sich parallel zu den Laufbahnen 7, 8 über die Scheitel der Kugeln 6 von dem Umlenkstück 14 zu dem Umlenkstück 15. Sie dienen dazu, die Kugeln 6 an dem Schlitten 5 auch dann zu halten, wenn er aus dem Führungskörper 2 und den Schienen 3, 4 herausgenommen ist. In den Schienen 3, 4 sind entsprechende Vertiefungen zur Aufnahme der Sicherungsbügel 27, 28 vorgesehen.

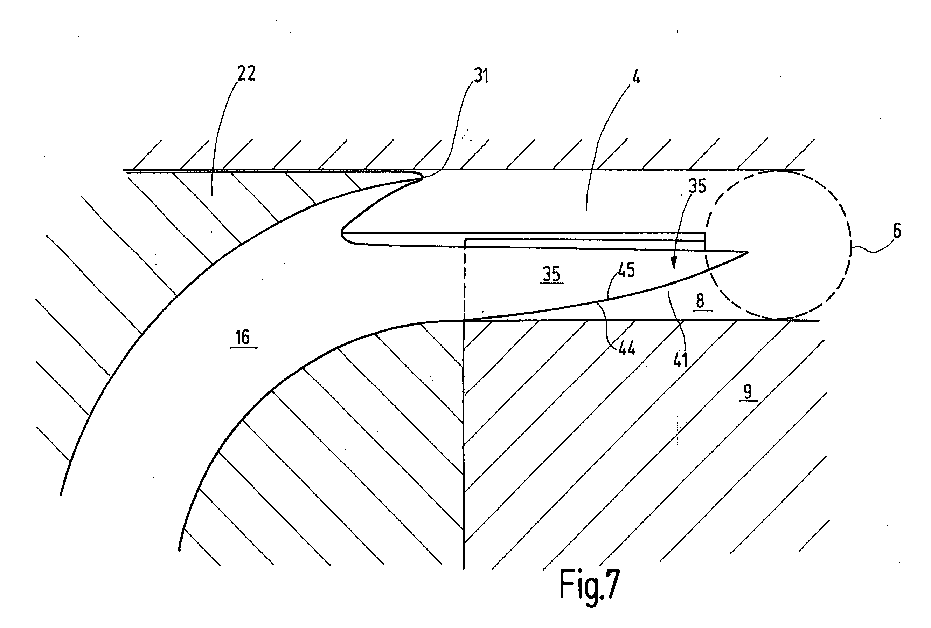

Die Vorsprünge 21 bis 24 sind an ihrer den Kugeln zugewandten Seite jeweils mit einer bogenförmigen, relativ scharfen Kante 31, 32, 33, 34 versehen. Diese Kanten begrenzen mit einer in den jeweiligen Umlenkkanal 16 bis 19 führenden Kehle einen Kreisquerschnitt. Dieser ist über den gesamten Umlenkkanal 16 bis 19 jeweils unverändert. Figur 7 veranschaulicht den Vorsprung 22 und den hier mündenden Umlenkkanal 16 beispielhaft.

Zur Aufnahme der zwischen der Schiene 4 und dem Wälzkörperführungskörper 9 laufenden Kugeln 6 dient jedoch nicht nur der Vorsprung 21 mit seiner Kante 31 sondern es sind zusätzlich zwei Leitfinger 35, 36 vorgesehen, die sich zu beiden Seiten der Führungsbahn 8 in entsprechende Ausnehmungen 37, 38 hinein erstrecken, die in dem Wälzkörperführungskörper 9 ausgebildet sind. Entsprechende Leitfinger 39, 40 sind an dem anderen Umlenkkanal 17 des Umlenkstücks 14 angeordnet.

Die Leitfinger 35, 36 verjüngen sich von dem Umlenkstück 14 weg zu ihren Spitzen hin. Sie weisen somit einen ungefähr dreieckigen Querschnitt auf. An ihren Innenseiten 41, 42 folgen sie der von der Wälzkörperlaufbahn 8 vorgegebenen Kontur weitgehend. Die Innenseiten 41, 42 sind durch Abformung eines Gießkerns mit vorzugsweise Kreisquerschnitt erzeugt, der beim Anspritzen der Umlenkstücke 14, 15 jeweils etwa u-förmig gebogen und in die Wälzkörperlaufbahn 8 und die Wälzkörperrückführungsbahn 11 sowie in die Wälzkörperlaufbahn 7 und die Wälzkörperrückführungsbahn 12 eingelegt worden sind. Die Außenform der Leitfinger 35, 36, 41, 42 ist hingegen durch die Form der Ausnehmungen 37, 38 sowie der entsprechenden an der Wälzkörperlaufbahn 7 vorgesehenen Ausnehmungen vorgegeben. Im vorliegenden und bevorzugten Ausführungsbeispiel ist die Ausnehmung 37, 38 durch Materialabtrag an dem stirnseitigen Ende der Wälzkörperlaufbahn 8 erzeugt, wobei eine durch entsprechende Bearbeitung z.B. Fräsen oder Schleifen erzeugte Fläche 43, die Wälzkörperlaufbahn 8 unter einem spitzen Winkel schneidet. Die Fläche 43 kann eine ebene Fläche oder, wie dargestellt, eine mit einer leichten zylindrischen Wölbung versehene Fläche sein. Aufgrund ihrer Neigung zu der Wälzkörperlaufbahn 8 schneidet sie diese an einer v-förmigen Kante 44, der eine ebenfalls v-förmige Kante 45 entspricht. Die Kante 45 läuft von der Spitze des Leitfingers 41 zu einem Scheitel 46 und von dort zu der Spitze des Leitfingers 42. Der Scheitel 46 liegt dabei etwa auf Höhe der Stirnseite 47 des Wälzkörperführungskörpers 9 oder auf gleicher Höhe mit dem Scheitel der Kante 44.

Die beiden Leitfinger 35, 36 bilden somit gewissermaßen die Zinken einer Gabel zur Aufnahme bzw. Abgabe der Kugeln 6 bei ihrem Übergang von der Wälzkörperlaufbahn 8 zu dem Umlenkkanal 16 und zurück. Sie verjüngen sich zu ihren Spitzen hin und sind zumindest geringfügig elastisch ausgebildet. Die Kanten 44, 45 sind in einem spitzen Winkel zu der Wälzkörperlaufbahn 8 orientiert.

An die Ausnehmungen 37, 38 schließt sich nach außen hin jeweils eine Befestigungsausnehmung 48, 49 an. Entsprechende Befestigungsausnehmungen 51, 52 sind an der Gegenseite bei der Wälzkörperlaufbahn 7 vorgesehen. Diese Ausnehmungen 48 bis 52 sind bezüglich einer Blickrichtung senkrecht zu der Stirnseite 47 hinterschnitten. Das Umlenkstück 14 weist entsprechende Befestigungsfortsätze 53, 54 für die Befestigungsausnehmungen 49, 52 auf, die durch Einfließen von Kunststoff in die Befestigungsausnehmungen 49, 52 beim Spritzgießen des Umlenkstücks 14 entstanden sind. Entsprechende Befestigungsfortsätze sind den Befestigungsausnehmungen 48, 51 zugeordnet. Sie sind an einander gegenüber liegenden Seiten des Umlenkstücks 14 vorgesehen und weisen aufeinander zu. Sie umgreifen den Endabschnitt des Wälzkörperführungskörpers 9 wie eine Klammer. Dadurch greifen sie mit einer Vorspannung in die Befestigungsausnehmungen 48 bis 52, wodurch das Umlenkstück form- und kraftschlüssig ortsfest an dem Wälzkörperführungskörper 9 gesichert ist. Die Vorspannung entsteht bei dem Spritzgussvorgang insbesondere durch das leichte Schwinden oder Schrumpfen des Kunststoffs beim Abkühlen und/oder Aushärten. Das Umlenkstück 14 sowie das Umlenkstück 15 sitzt dadurch unverrückbar fest an dem Wälzkörperführungskörper 9.

Die insoweit beschriebene Führungseinrichtung 1 arbeitet wie folgt:

Eine Bewegung des Schlittens 5 an dem Führungskörper 2 hat eine Rollbewegung der Kugeln 6 zwischen der jeweiligen Wälzkörperlaufbahn 7, 8 und der jeweils zugeordneten Führungsschiene 3, 4 zur Folge. Dabei treten Kugeln 6, wie Figur 7 veranschaulicht, an einem Ende des Wälzkörperführungskörpers 9 in das zugeordnete Umlenkstück 14 über, während Kugeln aus dem Umlenkstück 15 in die Wälzkörperlaufbahn 8 eintreten. Bei Rückbewegung des Schlittens 5 sind die Verhältnisse umgekehrt. Die Umlenkkanäle 16, 17, 18, 19 führen die Kugeln dann jeweils in die zugeordneten Wälzkörperrückführungskanäle 11, 12. Eine Besonderheit der insoweit herkömmlichen Führungseinrichtung 1 liegt in der Art des Übergangs der Kugeln 6 zwischen der Wälzkörperlaufbahn 7, 8 und dem jeweiligen Umlenkkanal 16, 17, 18, 19. Dies veranschaulicht Figur 7:

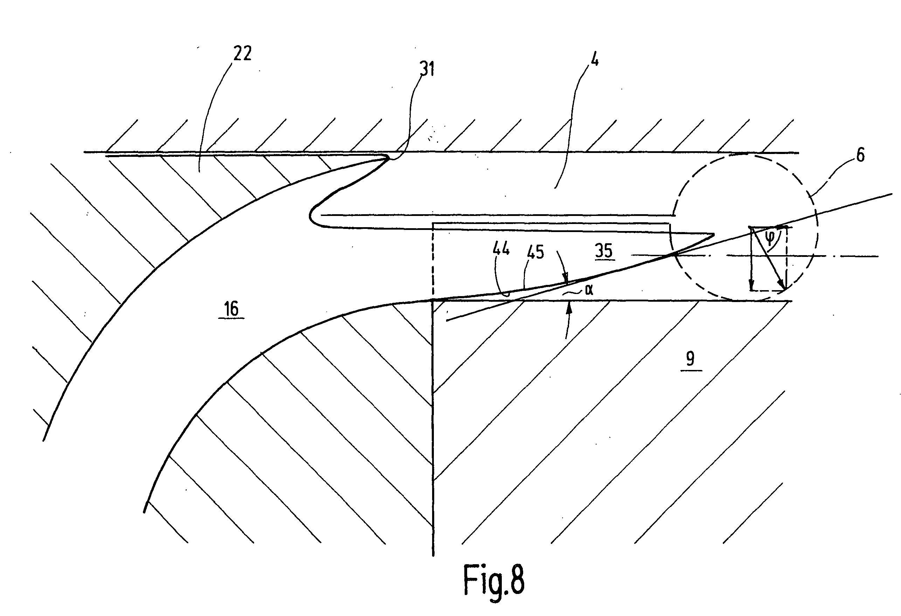

Die Kugeln 6 überqueren die Kanten 44, 45 zwischen der Wälzkörperlaufbahn 8 und den Leitfingern 35, 36 und werden somit zunächst zwischen den Leitfingern 35, 36 aufgenommen, die schon das mit dem Rückführungskanal 16 übereinstimmende Profil (vorzugsweise ein Kreisbogenprofil) festlegen. Die Leitfinger 35, 36 weisen, weil sie aus einem vorzugsweise zäh-elastischen Kunststoff bestehen, eine inhärente Nachgiebigkeit und gewisse Dämpfungseigenschaften auf, so dass der Übergang ruhig und ohne Kraftaufwand erfolgt. Die Kugeln 6 laufen somit glatt und ohne zu rucken aus der lasttragenden Zone heraus in den lastfreien Rückführungskanal und umgekehrt. Dies wird insbesondere auch dadurch erreicht und unterstützt, dass der in Laufrichtung eingeschlossene Winkel zwischen der Innenseite 41, 42 der Leitfinger 35, 36 und der Wälzkörperlaufbahn 8 ziemlich genau 180° beträgt. Die Abweichung von dem 180°-Winkel, d.h. der spitze Winkel α ist geringer als der Rollreibungswinkel ϕ jeder Kugel 6, wie es Figur 8 veranschaulicht.

Es hat sich gezeigt, dass die vorbeschriebene Ausbildung des Eingangs und des jeweiligen Ausgangs der Umlenkkanäle 16, 17, 18, 19 mit zwei seitlich an den Wälzkörperlaufbahnen 7, 8 angeordneten Leitfingern 35, 36, 39, 40 eine wesentlich vereinfachte Herstellung der Führungseinrichtung 1 gestattet, eine Verbesserung der Laufqualität ermöglicht und die Lebensdauer der Führungseinrichtung 1 erhöhen kann.

Die Herstellung des Wälzkörperführungskörpers 9 und seiner Umlenkstücke 14, 15 geht wie folgt:

Es wird zunächst der Wälzkörperführungskörper 9 mit geraden, im Querschnitt unveränderten Wälzkörperlaufbahnen 7, 8 erzeugt. Die Wälzkörperlaufbahnen 7, 8 werden dann an den Enden durch einen Schleif- oder Fräsvorgang, der die schräg orientierte Fläche 43 erzeugt, angeschnitten. Danach kann der Wälzkörperführungskörper 9 insbesondere im Bereich seiner Laufbahnen 7, 8 gehärtet werden. Anschließend können etwa u-förmige Gießkerne in den Wälzkörperführungskörper 9 eingelegt werden, die sich beispielsweise von der Laufbahn 8 zu dem Wälzkörperrückführungskanal 11 und von der Wälzkörperlaufbahn 7 zu dem Wälzkörperrückführungskanal 12 erstrecken und im Abstand aneinander vorbeigehen. Die Umspritzung beider Enden des Wälzkörperführungskörpers 9 innerhalb entsprechender Gießformen ergibt die Umlenkstücke 14, 15 einschließlich der Leitfinger 35, 36, 41, 42, die einen stetigen Übergang von den Wälzkörperlaufbahnen 7, 8 mit Spitzbogenprofil zu den Umlenkkanälen 16, 17, 18, 19 bilden, die einen Kreisquerschnitt aufweisen. Insbesondere im Übergangsbereich kann somit Tangentenstetigkeit erreicht werden. Dies bedeutet, dass die an die Lauflinien der Kugeln entlang des Wegs der Kugeln angelegten Tangenten ausnahmslos eindeutig definiert sind, d.h. dass von den Kugeln keine ausgeprägten Kanten zu überqueren sind. Außerdem kann Krümmungsstetigkeit erreicht werden, d.h. dass die Krümmung der Laufbahn der Kugeln entlang der Lauflinien an keiner Stelle von einem Wert auf einen anderen springt, sondern sich stets stetig ändert.

Bei einer Führungseinrichtung 1 sind an den stirnseitigen Enden eines Wälzkörperführungskörpers 9 Umlenkstücke 14, 15 vorgesehen, die die Wälzkörperlaufbahnen 7, 8 mit entsprechenden Wälzkörperrückführungsbahnen 11, 12 verbinden. Den Übergang zwischen den in den Umlenkstücken 14, 15 vorgesehenen Umlenkkanälen 16, 17, 18, 19 und den Wälzkörperlaufbahnen 7, 8 bilden Leitfinger 35, 36, 39, 40, die zu beiden Seiten der jeweiligen Wälzkörperlaufbahn 7, 8 in entsprechende Ausnehmungen 37, 38 ragen, die zu beiden Seiten der Wälzkörperlaufbahn 8 ausgebildet sind.

## Patentansprüche

1. Führungseinrichtung (1) mit Wälzkörperumlauf, insbesondere Kugelschlittenführung,
mit einem Wälzkörperführungskörper (9), der eine Wälzkörperlaufbahn (7, 8) und eine Wälzkörperrückführungsbahn (11, 12) für Wälzkörper (6) aufweist,
mit einem Umlenkstück (14, 15), das einen Umlenkkanal (16, 17, 18, 19) aufweist und das an den Wälzkörperführungskörper (9) angeschlossen ist,
**dadurch gekennzeichnet,**
**dass** das Umlenkstück (14, 15) wenigstens einen Leitfortsatz (35, 36) aufweist, der sich entlang der Wälzkörperlaufbahn (7, 8) in Ausnehmungen (48, 49, 51, 52) des Wälzkörperführungskörpers (9) hinein erstreckt.

2. Führungseinrichtung nach Anspruch 1, **dadurch gekennzeichnet, dass** das Umlenkstück (14, 15) zwei Leitfortsätze (35, 36) aufweist, die zu beiden Seiten der Wälzkörperlaufbahn (8) angeordnet sind und in dort vorgesehene Ausnehmungen (37, 38) ragen.

3. Führungseinrichtung nach Anspruch 1, **dadurch gekennzeichnet, dass** die beiden Leitfortsätze (35) untereinander verbunden sind.

4. Führungseinrichtung nach Anspruch 1, **dadurch gekennzeichnet, dass** die Wälzkörperlaufbahn (7, 8) ein Querschnittsprofil aufweist, das sich von dem Querschnittsprofil der Umlenkbahn (16, 17, 18, 19) unterscheidet.

5. Führungseinrichtung nach Anspruch 2, **dadurch gekennzeichnet, dass** die Ausnehmungen (37, 38) von dem Umlenkkörper (14, 15) weg spitz auslaufen.

6. Führungseinrichtung nach Anspruch 1, **dadurch gekennzeichnet, dass** der wenigstens eine Leitfortsatz (35, 36) spitz ausläuft.

7. Führungseinrichtung nach Anspruch 2, **dadurch gekennzeichnet, dass** die Ausnehmungen (37, 38) eine im Wesentlichen ebene oder leicht gekrümmte Grundfläche (43) aufweisen, die die Wälzkörperlaufbahn (8) schräg schneidet.

8. Führungseinrichtung nach Anspruch 1, **dadurch gekennzeichnet, dass** der wenigstens eine Leitfortsatz (35, 36) in der Ausnehmung (37, 38) lose anliegt.

9. Führungseinrichtung nach Anspruch 1, **dadurch gekennzeichnet, dass** der Leitfortsatz (35, 36) flexibel ausgebildet ist.

10. Führungseinrichtung nach Anspruch 9, **dadurch gekennzeichnet, dass** der Leitfortsatz (35, 36) mit der Ausnehmung (37, 38) einen engen keilförmigen Spalt begrenzt.

11. Führungseinrichtung nach Anspruch 1, **dadurch gekennzeichnet, dass** der Leitfortsatz (35, 36) mit der Wälzkörperlaufbahn (7, 8) einen spitzen Winkel (α) einschließt, der kleiner ist als der Rollreibungswinkel (ϕ) des Wälzkörpers (6).

12. Führungseinrichtung nach Anspruch 1, **dadurch gekennzeichnet, dass** die Wälzkörperbahn insbesondere im Bereich des Übergangs zwischen der Wälzkörperlaufbahn (7, 8) und dem Umlenkkanal (16, 17, 18, 19) tangentenstetig ausgebildet ist.

13. Führungseinrichtung nach Anspruch 1, **dadurch gekennzeichnet, dass** die Wälzkörperbahn insbesondere im Bereich des Übergangs zwischen der Wälzkörperlaufbahn (7, 8) und dem Umlenkkanal (16, 17, 18, 19) krümmungsstetig ausgebildet ist.

14. Führungseinrichtung nach Anspruch 1, **dadurch gekennzeichnet, dass** der Umlenkkanal (16, 17, 18, 19) ein kreisrundes Profil aufweist, dessen Durchmesser etwas größer ist als der Durchmesser des Wälzkörpers (6).

15. Führungseinrichtung (1) mit Wälzkörperumlauf, insbesondere Kugelschlittenführung,
mit einem Wälzkörperführungskörper (9), der eine Wälzkörperlaufbahn (7, 8) und eine Wälzkörperrückführungsbahn (11, 12) für Wälzkörper (6) aufweist,
mit einem Umlenkstück (14, 15), das einen Umlenkkanal (16, 17, 18, 19) aufweist und das an den Wälzkörperführungskörper (9) angeschlossen ist,
**dadurch gekennzeichnet,**
**dass** das Umlenkstück (14, 15) an den Wälzkörperführungskörper (9) angespritzt und an diesem formschlüssig gesichert ist.

16. Führungseinrichtung nach Anspruch 15, **dadurch gekennzeichnet, dass** das Umlenkstück (9) zur formschlüssigen Sicherung wenigstens einen Befestigungsfortsatz (53) aufweist, dem wenigstens eine Befestigungsausnehmung (49) in dem Wälzkörperführungskörper (9) zugeordnet ist.

17. Führungseinrichtung nach Anspruch 15, **dadurch gekennzeichnet, dass** das Umlenkstück (14) wenigstens zwei einander gegenüberliegend angeordnete Befestigungsfortsätze (53, 54) aufweist, die zwischen einander einen Abschnitt des Wälzkörperführungskörpers (9) aufnehmen.

18. Führungseinrichtung nach Anspruch 17, **dadurch gekennzeichnet, dass** den Befestigungsfortsätzen (53, 54) voneinander weg weisende Befestigungsausnehmungen (49, 52) zugeordnet sind.

19. Führungseinrichtung nach Anspruch 18, **dadurch gekennzeichnet, dass** die Befestigungsausnehmungen (49, 52) neben den Wälzkörperlaufbahnen (8) angeordnet sind.

20. Führungseinrichtung mit Leitfortsätzen (35, 36) nach einem der Ansprüche 1 bis 14 und mit einer formschlüssigen Umlenkkörperbefestigung nach einem der Ansprüche 15 bis 19.

21. Verfahren zur Herstellung einer Führungseinrichtung nach Anspruch 1 oder 15, bei der an den Wälzkörperführungskörper (9) etwa u-förmig gebogene Gießkerne mit Kreisquerschnitt angelegt werden, deren Schenkel sich in die Wälzkörperlaufbahnen (7, 8) erstrecken, wonach die Gießkerne unter Ausbildung der Leitfortsätze (35, 36) mit Kunststoff umspritzt werden, wonach die Gießkerne entfernt werden.
